# EUROPEAN PATENT APPLICATION

(11) **EP 4 542 362 A1**
(43) Date of publication of application: **23.04.2025**
(21) Application number: 23852699.0
(22) Date of filing: 09.06.2023
(51) Int. Cl.: G06F 3/0488, G06F 3/041, G06F 3/0354, G06F 3/0486

(54) **ELECTRONIC DEVICE AND METHOD FOR IDENTIFYING LINE CORRESPONDING TO STROKE BY USING GESTURE FOR INPUTTING STROKE**

(30) Priority: 08.08.2022 KR 20220098900; 26.08.2022 KR 20220107966
(71) Applicant: Samsung Electronics Co., Ltd., Suwon-si, Gyeonggi-do 16677 (KR)
(72) Inventor: KWAK, Taewon, Suwon-si Gyeonggi-do 16677 (KR)
(74) Representative: Gulde & Partner
(86) International application number: PCT/KR2023/007951
(87) International publication number: WO 2024/034812

(57) **Abstract**

A processor of an electronic device, according to an embodiment, may be configured to, in response to identifying an external object being dragged on a display of the display device, display a stroke based on a trajectory along which the external object is dragged. The processor may be configured to, in response to identifying that the external object has been touched within an area of a specified size in the display during a first time interval while the external object is identified as being dragged, display a line in association with the stroke. The processor may be configured to, in response to identifying that the external object has been touched within the area during a second time interval subsequent to the first time interval while the external object is identified as being dragged, rotate the line on the basis of the trajectory along which the external object is dragged to another area, which is different from the area, after the second time interval.

## Description

### [Technical Field]

The following descriptions relate to an electronic device and a method for identifying a line corresponding to a stroke by using a gesture for inputting the stroke.

### [Background Art]

An electronic device that extracts text from handwriting indicated by strokes drawn by a user is being developed. For example, the user may draw strokes indicating the handwriting by moving a finger, a stylus, and/or a digitizer contacted on a display of the electronic device, or by moving a pointing device (e.g., a mouse) connected with the electronic device. From the strokes, the electronic device may identify a letter such as an alphabet. Based on identifying one or more letters, the electronic device may identify text including the one or more letters.

### [Disclosure]

### [Technical Solution]

An electronic device according to an embodiment may comprise a display, and a processor. The processor may be configured to display, in response to identifying an external object dragged on the display, a stroke based on a trajectory of the dragged external object. The processor may be configured to, while identifying that the external object is dragged, display, in response to identifying that the dragged external object is contacted within an area having a preset size in the display during a first time section, a line in association with the stroke. The processor may be configured to, while identifying that the external object is dragged, rotate, in response to identifying that the dragged external object is contacted with the area during a second time section after the first time section, the line based on a trajectory of the external object being dragged to another area different from the area after the second time section. According to an embodiment, the electronic device may execute all functions of representation the stroke, obtaining the line based on the stroke, and changing the representation of the line based on a single contact between the display and the external object.

A method of an electronic device according to an embodiment may include displaying, in response to identifying of an external object being dragged on a display in the electronic device, a stroke based on a trajectory that the dragged external object. The method may include, while identifying that the external object is dragged, displaying, in response to identifying that the dragged external object is contacted within an area having a preset size in the display during a first time section, a line in association with the stroke. The method may include, while identifying that the external object is dragged, rotating, in response to identifying that the dragged external object is contacted with the area during a second time section after the first time section, the line based on the external object which is dragged to another area different from the area after the second time section.

An electronic device according to an embodiment may comprise a display and a processor. The processor may be configured to display, based on identifying an external object dragged on the display, a stroke based on a trajectory of the dragged external object. The processor may be configured to display, in a state that a contact between the external object, and the display associated with the stroke is maintained, a line for representing a figure based on the stroke, in response to identifying that the external object is contacted within an area having a preset size in the display during a first time section. The processor may be configured to receive, based on the external object contacted on the line in the display in the state, an input indicating modification of representation of the line. The processor may be configured to change the representation of the line based on the received input.

A method of an electronic device according to an embodiment may include displaying, based on identifying of an external object being dragged on a display in the electronic device, a stroke based on a trajectory of the dragged external object. The method may include displaying, in a state that a contact between the external object, and the display associated with the stroke is maintained, a line for representing a figure based on the stroke, in response to identifying that the external object is contacted within an area having a preset size in the display during a first time section. The method may include receiving, based on the external object contacted on the line in the display in the state, an input indicating modification of representation of the line. The method may include changing the representation of the line based on the received input.

### [Description of the Drawings]

FIG. 1 is a block diagram of an electronic device in a network environment according to various embodiments.
FIG. 2 illustrates an example of an operation performed by an electronic device based on motion of an external object contacted on a display of the electronic device to input a stroke, according to an embodiment.
FIG. 3 is a block diagram of an electronic device according to an embodiment.
FIG. 4A, FIG. 4B, and FIG. 4C illustrate an example of an operation in which an electronic device displays a stroke and/or a line based on motion, based on the motion of an external object contacted on a display, according to an embodiment.
FIG. 5 illustrates an example of an operation in which an electronic device rotates a line displayed in a display based on motion of an external object contacted on the display, according to an embodiment.
FIG. 6A, FIG. 6B, FIG. 6C, and FIG. 6D illustrate an example of an operation in which an electronic device adjusts a shape and/or a color of a line displayed in a display based on motion of an external object contacted on the display according to an embodiment.
FIG. 7 illustrates an example of operations performed by an electronic device based on identifying an external object contacted on a display, according to an embodiment.
FIG. 8 illustrates an example of operations performed by an electronic device according to an embodiment.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

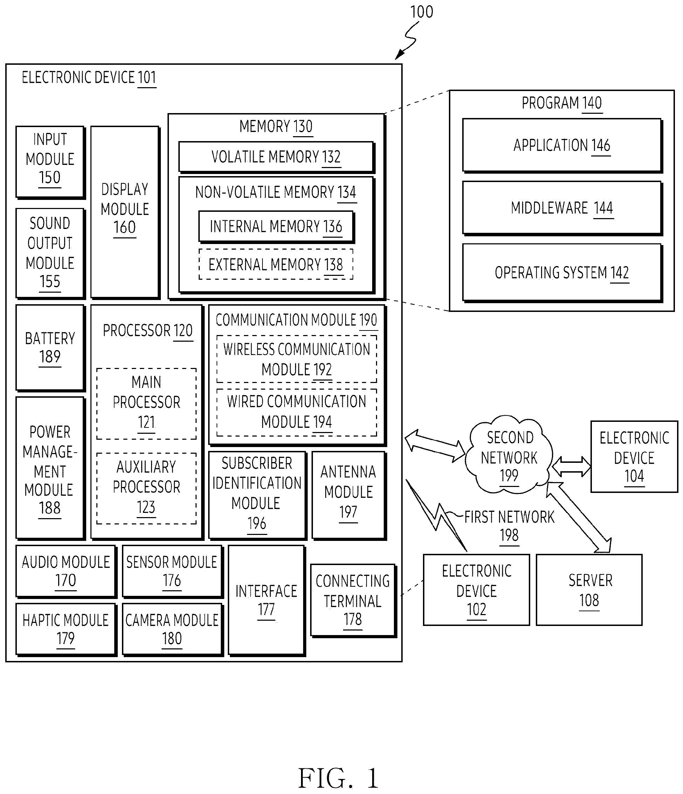

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mm Wave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

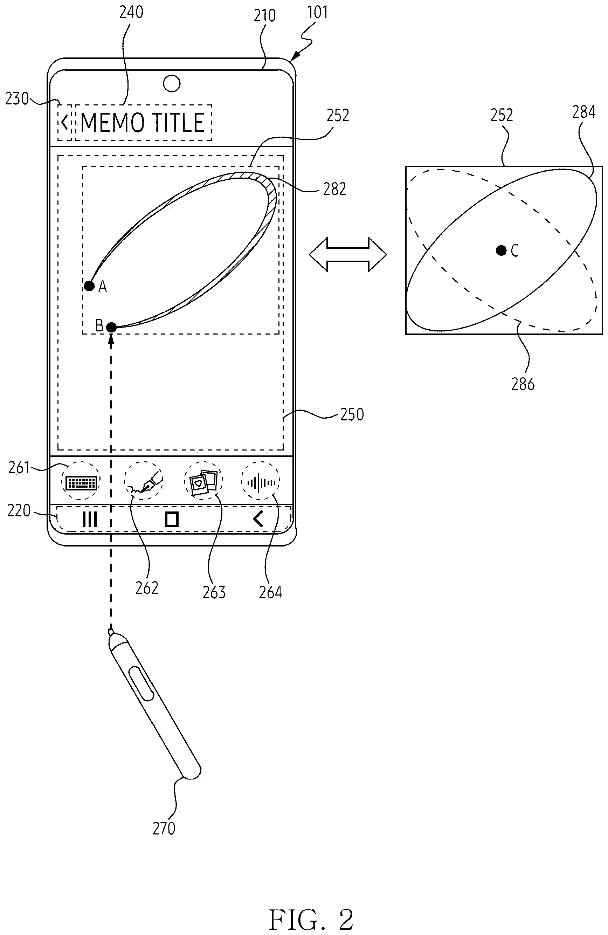

FIG. 2 illustrates an example of an operation performed by an electronic device 101 based on motion of an external object 270 contacted on a display 210 of the electronic device 101 to input a stroke according to an embodiment. The electronic device 101 of FIG. 2 may be an example of the electronic device 101 of FIG. 1. Referring to FIG. 2, the electronic device 101 may be a terminal owned by a user. The terminal may include, for example, a personal computer (PC) such as a laptop and a desktop, a smartphone, a smartpad, a tablet PC, a smartwatch, and/or a smart accessory such as a head-mounted device (HMD).

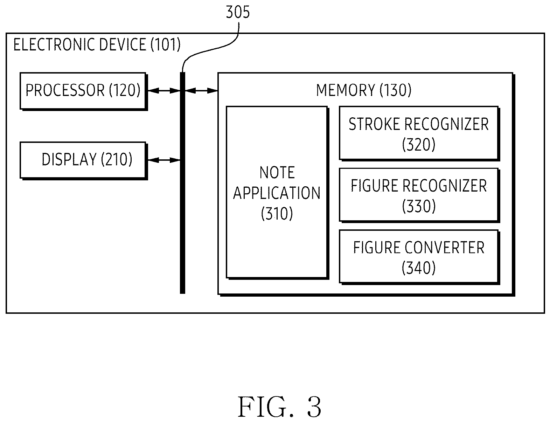

According to an embodiment, the electronic device 101 may include the display 210. According to an embodiment, the electronic device 101 may visualize handwriting by using the display 210. An example of hardware and/or software included in the electronic device 101 to visualize the handwriting is described with reference to FIG. 3. The handwriting may include one or more lines drawn on a surface by the user to convey a linguistic meaning. The embodiment is not limited thereto, and the handwriting may include one or more lines drawn on a surface to convey the user's intention (e.g., the user's non-verbal meaning) that is different from the linguistic meaning. Hereinafter, the one or more lines included in the handwriting may be referred to as the stroke.

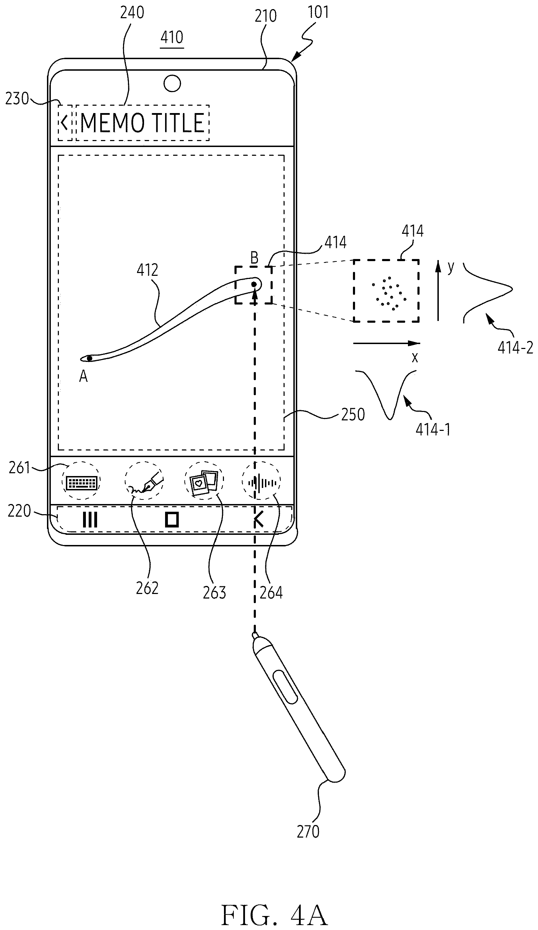

According to an embodiment, the electronic device 101 may obtain information on one or more strokes included in the handwriting by digitally converting analog handwriting. The information may include a position and/or an order of each of the one or more strokes. For example, the electronic device 101 may receive an input indicating a plurality of strokes a picture, based on a fingertip contacted on the display 210, a stylus, a digitizer and/or a pointing device such as a mouse to adjust a position of a cursor. Referring to FIG. 2, the external object 270 different from the electronic device 101 according to an embodiment is illustrated. The external object 270 may include the stylus and/or the digitizer. For example, the stroke may be a trajectory and/or a path dragged by the external object 270 while the external object 270 including the fingertip, the stylus, and/or the digitizer is contacted on the display 210. For example, the stroke may be a trajectory and/or a path of a cursor and/or a mouse pointer moved in the display 210 by the external object 270 different from the electronic device 101. According to an embodiment, an operation in which the electronic device 101 obtains the information and media content including the information based on the user's gesture drawing at least one stroke will be described with reference to FIG. 4A to FIG. 4C.

In an embodiment, the media content may include information generated based on an interaction between the user and the electronic device 101. The media content may include information to reconstruct handwriting, a figure, text, an image, a video, and/or audio received from the user. In an embodiment, the media content may be referred to as a document and/or a memo. For example, in the media content, the information indicating one or more strokes drawn by the user may be included. For example, in the media content, the image, the video, and/or the audio embedded by the user may be included. Reconstructing the media content may include an operation in which the electronic device 101 visualizes the information included in the media content in the display 210.

Referring to FIG. 2, an example of a state in which the electronic device 101 visualizes the at least one stroke in the display 210 according to an embodiment is illustrated. A state of FIG. 2 may include a state in which a preset application (e.g., a note application), which is executed by the electronic device 101, to obtain information associated with the handwriting form the user and/or the media content including the information is executed. The electronic device 101 may display a navigation bar for control the application executed by the electronic device 101 within an area 220 of the display 210. The electronic device 101 may display a visual object 230 to replace a screen displayed in the display 210 with another screen different from the screen. The electronic device 101 may display a name and/or a title assigned to the media content within an area 240 of the display 210.

According to an embodiment, the electronic device 101 may execute a function to add text in the media content displayed through an area 250 based on a visual object 261. In response to an input indicating selection of the visual object 261, the electronic device 101 may display a software keyboard in the display 210. The electronic device 101 may execute a function to add an image and/or a video in the media content displayed through the area 250 based on a visual object 263. The electronic device 101 may execute a function to add audio in the media content displayed through the area 250 based on the visual object 264.

According to an embodiment, the electronic device 101 may execute a function to add information associated with handwriting in the media content displayed through the area 250 by using a visual object 262. After receiving an input indicating selection of the visual object 262, the electronic device 101 may display at least one stroke having a shape of a trajectory within the area 250 based on the trajectory of the external object 270 contacted on the area 250.

According to an embodiment, the electronic device 101 may receive an input to draw the at least one stroke based on the trajectory of the external object 270 contacted on the area 250 of the display 210. For example, in response to identifying the external object 270 being dragged on the display 210, the electronic device 101 may display a stroke 282 based on the trajectory that the external object 270 is dragged. The electronic device 101 may display the at least one stroke based on the path of the external object 270 within the area 250, based on information indicating a moment and/or a position of the external object 270 contacted on the area 250.

Referring to FIG. 2, an exemplary state in which the electronic device 101 displays the stroke 282 based on the external object 270 moved along a curved trajectory from a point A to a point B within the area 250 is illustrated. While the external object 270 is dragged from the point A to the point B, the electronic device 101 may trigger a plurality of events associated with a contact between the external object 270 and the display 210. For example, based on identifying the external object 270 touched on point A, the electronic device 101 may identify an occurrence of a preset event to notify initiation of the contact between the external object 270 and the display 210, such as a touch down. While the external object 270 is dragged from the point A to the point B, the electronic device 101 may identify the repeated occurrence of the preset event to notify that the external object 270 is dragged, such as a touch move. Based on identifying that the external object 270 is separated from the display 210, the electronic device 101 may identify the occurrence of the preset event to notify an end of the contact between the external object 270 and the display 210, such as a touch up. Referring to FIG. 2, the stroke 282 may extend along a trajectory that the external object 270 is dragged based on the repeated occurrence of the preset event such as the touch move. For example, a shape of the stroke 282 may correspond to the trajectory that the external object 270 contacted on the display 210 is dragged from the point A to the point B. Thickness of the stroke 282 may indicate pressure and/or a slope of the external object 270 contacted on the display 210.

According to an embodiment, the electronic device 101 may support one or more functions associated with the stroke 282 added based on the trajectory that the external object 270 is dragged. The electronic device 101 may receive an input to selectively execute the one or more functions based on motion of the external object 270 contacted on the display 210. The one or more functions may include a function of moving the stroke 282. The one or more functions may include a function of displaying a figure based on the stroke 282. The figure may include a vector graphic object of a specific category represented by the stroke 282. The one or more functions may include a function of rotating the stroke 282. The one or more functions may include a function of obtaining text represented by the stroke 282.

According to an embodiment, the electronic device 101 may obtain a figure represented by the stroke 282 and/or a line indicating the figure from the stroke 282 based on motion of the external object 270. For example, the electronic device 101 may identify that the external object 270 maintains a contact on the point B in a state of displaying the stroke 282 based on the external object 270 dragged from the point A to the point B. Based on identifying that the external object 270 maintains the contact over a preset duration (e.g., 500 milliseconds) on the point B, the electronic device 101 may identify an occurrence of the preset event (e.g., a hold motion event) to display a line representing the stroke 282. For example, the electronic device 101 may display a line 284 in association with the stroke 282 based on the occurrence of the hold motion event. Referring to FIG. 2, according to an embodiment, the electronic device 101 may display the line 284 within an area 252 in which the stroke 282 is displayed. According to one embodiment, an operation in which the electronic device 101 obtains the line 284 from the stroke 282 based on the preset event such as the touch move will be described with reference to FIG. 4A to FIG. 4B.

According to an embodiment, the electronic device 101 may replace the stroke 282 with the line 284, based on the external object 270 contacted over the preset duration on the point B, in a state of displaying the strokes 282 based on the external object 270 dragged from the point A to the point B. For example, in a state that a contact between the external object 270, and the display 210 associated with the stroke 282 is maintained, the electronic device 101 may display the line 284 for representing a figure based on the stroke 282, in response to identifying that the external object 270 is contacted within an area having a preset size in the display 210 during a first time section.

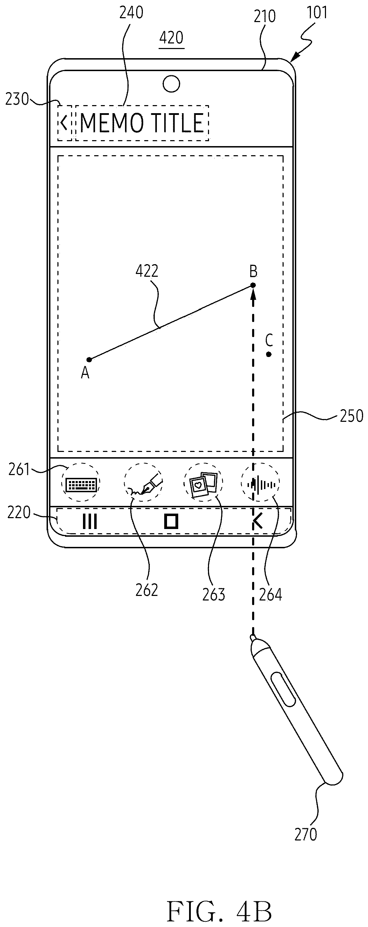

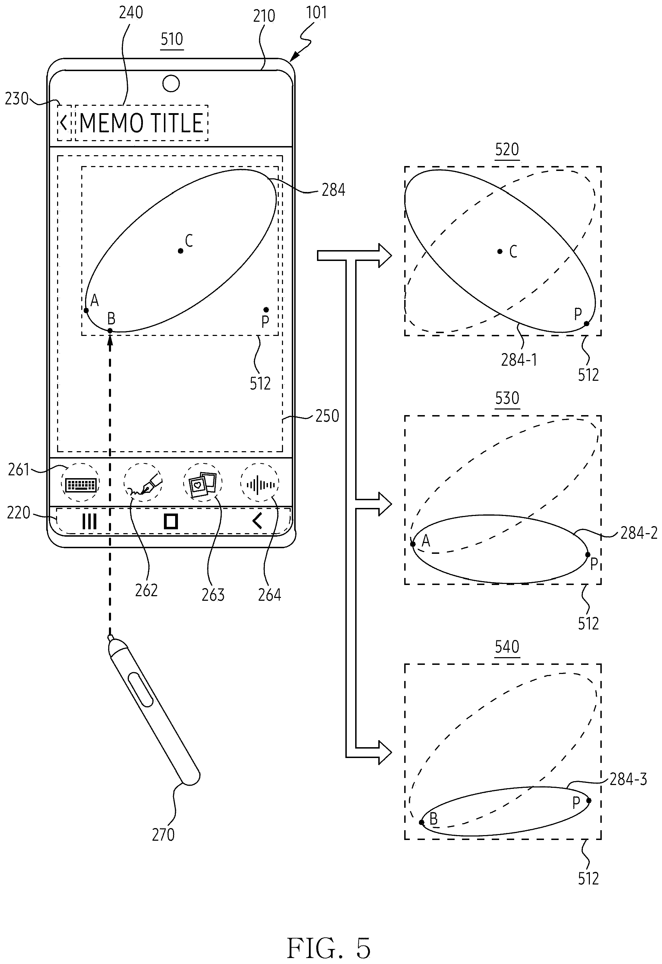

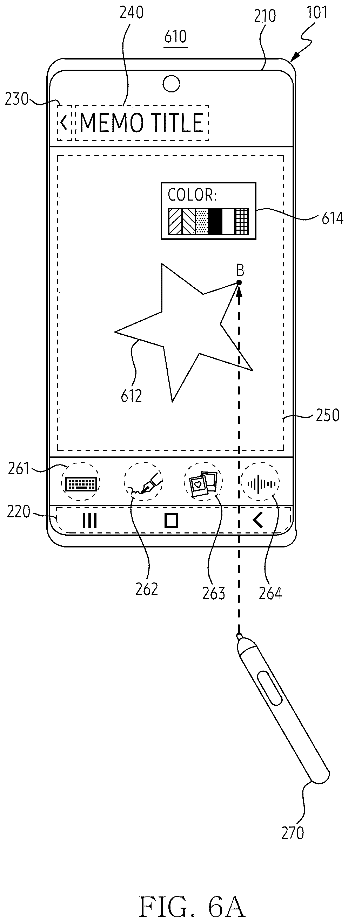

According to an embodiment, after displaying the line 284, the electronic device 101 may change the line 284 based on a trajectory of the external object 270 contacted on the display 210. In a state that the contact between the external object 270 that has performed the motion to draw the stroke 282, and the display 210 is maintained, the electronic device 101 may receive, based on the external object 270 contacted on the line 284 in the display 210, an input indicating modification of representation of the line 284. Based on the received input, the electronic device 101 may change the representation of the line 284. For example, based on the trajectory of the external object 270 after representing the line 284, the electronic device 101 may rotate the line 284. Referring to FIG. 2, according to an embodiment, the electronic device 101 may rotate the line 284 based on a point C, which is a pivot associated with the line 284. For example, the line 286 may be a result of rotating the line 284 based on the trajectory of the external object 270 centered around the point C. An operation in which the electronic device 101 rotates the line 284 based on the trajectory of the external object 270 is described with reference to FIG. 4B to FIG. 4C and/or FIG. 5. An operation in which the electronic device 101 changes thickness, a color, and/or a size of the line 284 based on the trajectory of the external object 270 is described with reference to FIG. 6A to FIG. 6D.

As described above, according to an embodiment, the electronic device 101 may sequentially perform addition of the stroke 282, obtaining of the line 284 based on the stroke 282, and rotation of the line 284, based on a single contact of the external object 270 on the display 210. Based on movement and/or a hold of the external object 270 included in the single contact, the electronic device 101 may execute different functions based on a point of the external object 270 contacted on the display 210. Since the electronic device 101 performs other functions (e.g., the representation and/or the rotation of the line 284) different from a function of displaying the stroke 282 based on the single contact of the external object 270, the electronic device 101 may improve a user experience associated with drawing based on the external object 270.

Hereinafter, a structure of hardware included in the electronic device 101 according to an embodiment will be described with reference to FIG. 3.

FIG. 3 is a block diagram of an electronic device 101 according to an embodiment. The electronic device 101 of FIG. 3 may be an example of the electronic device 101 of FIG. 2. For example, the electronic device 101 and the display 210 of FIG. 2 may include the electronic device 101 and a display 210 of FIG. 3.

Referring to FIG. 3, according to an embodiment, the electronic device 101 may include at least one of a processor 120, memory 130, and the display 210. The processor 120, the memory 130, and the display 210 may be electronically and/or operably coupled with each other by an electronic component such as a communication bus 305. Hereinafter, hardware components being operatively coupled may mean that a direct connection or an indirect connection between the hardware components is established by wire or wirelessly so that a second hardware component among the hardware components is controlled by a first hardware component. Although illustrated based on different blocks, the embodiment is not limited thereto, and a portion (e.g., at least a portion of the processor 120, and/or the memory 130) of the hardware components illustrated in FIG. 3 may be included in a single integrated circuit, such as a system on a chip (SoC). A type and/or the number of the hardware components included in the electronic device 101 are not limited illustrated in FIG. 3. For example, the electronic device 101 may include only a portion of the hardware components illustrated in FIG. 3.

According to an embodiment, the processor 120 of the electronic device 101 may include a hardware component to process data based on one or more instructions. For example, the hardware components to process data may include an arithmetic and logic unit (ALU), a floating point unit (FPU), a field programmable gate array (FPGA), and/or a central processing unit (CPU). The number of the processors 120 may be one or more. For example, the processor 120 may have a structure of a multi-core processor such as a dual core, a quad core, or a hexa core. The processor 120 of FIG. 3 may include the processor 120 of FIG. 1.

According to an embodiment, the memory 130 of the electronic device 101 may include the hardware component to store data and/or an instruction inputted and/or outputted to the processor 120. The memory 130 may include, for example, a volatile memory such as a random-access memory (RAM), and/or a non-volatile memory such as a read-only memory (ROM). The volatile memory may include, for example, at least one of dynamic RAM (DRAM), static RAM (SRAM), Cache RAM, and pseudo SRAM (PSRAM). The non-volatile memory may include at least one of, for example, a programmable ROM (PROM), an erasable PROM (EPROM), an electrically erasable PROM (EEPROM), a flash memory, a hard disk, a compact disk, and an embedded multi media card (eMMC). The memory 130 of FIG. 3 may include the memory 130 of FIG. 1.

According to an embodiment, the display 210 of the electronic device 101 may output visualized information (e.g., at least one of screens of FIG. 4A to FIG. 4C, FIG. 5 and/or FIG. 6A to FIG. 6D) to a user. For example, the display 210 may output visualized information to the user by being controlled by the processor 120. The display 210 may include a flat panel display (FPD), a flexible display, and/or an electronic paper. The FPD may include a liquid crystal display (LCD), a plasma display panel (PDP), and/or one or more light emitting diodes (LEDs). The LED may include an organic LED (OLED).

According to an embodiment, the display 210 of the electronic device 101 may include a sensor (e.g., a touch sensor panel (TSP)) to detect an external object (e.g., the external object 270 of FIG. 2) on the display 210. For example, based on the TSP, the electronic device 101 may detect the external object contacting the display 210 or floating on the display 210. In response to detecting the external object, the electronic device 101 may execute a function associated with a specific visual object, corresponding to a position of the external object on the display 210, among the visual objects being displayed in the display 210.

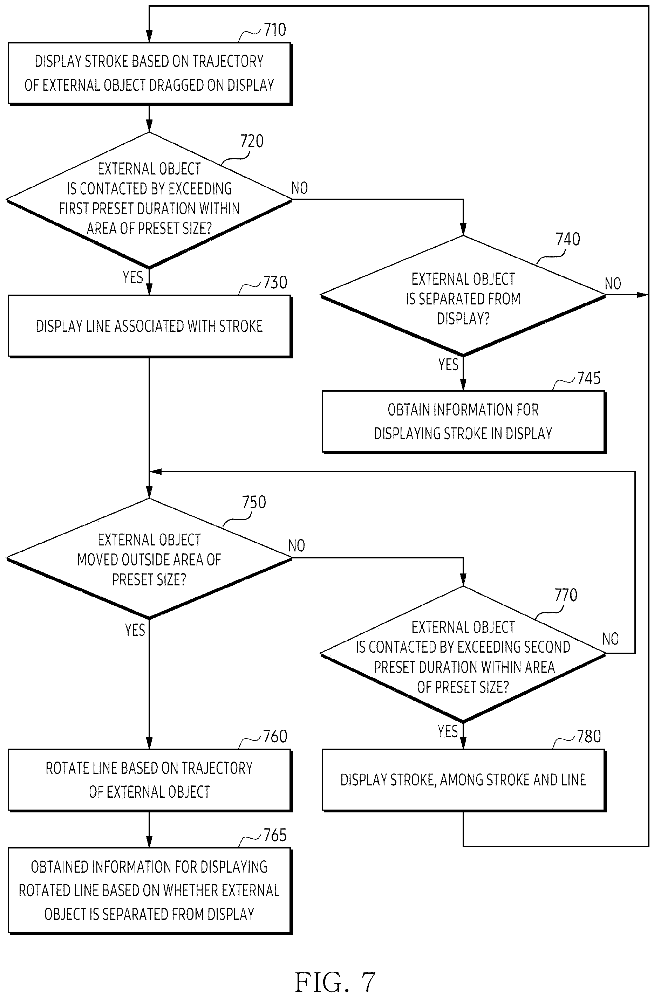

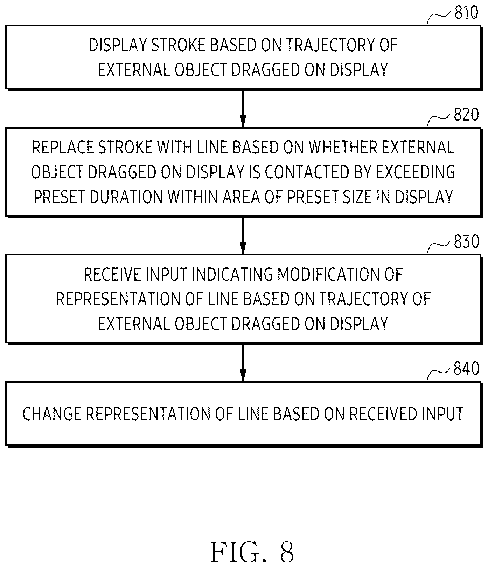

In the memory 130 of the electronic device 101 according to an embodiment, one or more instructions indicating a calculation and/or an operation to be performed by the processor 120 on data may be stored. A set of one or more instructions may be referred to as firmware, an operating system, a process, a routine, a sub-routine and/or an application. For example, the electronic device 101 and/or the processor 120 may perform at least one of operations of FIG. 7 and/or FIG. 8 when the set of a plurality of instructions distributed in a form of the operating system, the firmware, the driver, and/or the application is executed. Hereinafter, the application being installed in the electronic device 101 may mean that one or more instructions provided in the form of the application are stored in the memory 130 of the electronic device 101, and the one or more applications are stored in an executable format (e.g., a file having a preset extension by the operating system of the electronic device 101).

Referring to FIG. 3, as an example of applications stored in the memory 130 according to an embodiment, a note application 310, a stroke recognizer 320, a figure recognizer 330, and/or a figure converter 340 are illustrated. The note application 310 of FIG. 3 may be application software to display a user interface (UI) for executing a function associated with handwriting on the display 210. Although illustrated based on different blocks, the embodiment is not limited thereto. For example, the stroke recognizer 320, the figure recognizer 330, and/or the figure converter 340 may be included in the note application 310. The stroke recognizer 320, the figure recognizer 330, and/or the figure converter 340 may be executed in a second state distinct from a first state shown to the user, such as a background process and/or a daemon.

According to an embodiment, the stroke recognizer 320 of FIG. 3 may be software to obtain at least one stroke from a trajectory of the external object contacted on the display 210. Based on execution of the stroke recognizer 320, the electronic device 101 may obtain information to indicate the at least one stroke. The information may include a list (e.g., a dot list) of coordinates indicating points of the external object on the display 210, which is a trajectory of the external object corresponding to a single stroke, measured along a preset period (e.g., 8.3 milliseconds).

In an embodiment, based on execution of the figure recognizer 330, the electronic device 101 may identify a figure corresponding to a stroke indicated by the information obtained based on the stroke recognizer 320. For example, based on identifying a figure similar to the stroke recognized by the stroke recognizer 320, the electronic device 101 may identify the figure corresponding to the stroke, among preset figures (e.g., a straight line, a curved line, a triangle, a square, a pentagon, a hexagon, a circle, and/or a heart). The figure recognizer 330 may include a neural network trained to classify a stroke drawn by the user as any one of the preset figures.

According to an embodiment, the electronic device 101 may change a stroke received from the user based on the UI provided through the note application 310 into a line (e.g., the line 284 of FIG. 2) indicating the figure identified by the figure recognizer 330 based on execution of the figure converter 340. The line may include a vector graphic object represented by an equation associated with the figure and one or more parameters included in the equation. According to an embodiment, the electronic device 101 may execute one or more functions indicated by motion, by selectively executing the stroke recognizer 320, the figure recognizer 330, and/or the figure converter 340 based on the motion of the external object contacted on the display 210. For example, based on a single contact between the external object and the display 210, the electronic device 101 may perform all of adding a stroke based on the trajectory of the external object, adding a line based on the stroke, and rotating the line.

Hereinafter, operations performed by the electronic device 101 according to an embodiment based on the single contact between the display 210 and the external object will be described with reference to FIG. 4A to FIG. 4C.

FIG. 4A to FIG. 4C illustrate an example of an operation in which an electronic device 101 according to an embodiment displays a stroke and/or a line based on motion, based on the motion of an external object 270 contacted on a display 210. The electronic device 101 of FIG. 4A to FIG. 4C may be an example of the electronic device 101 of FIG. 2. For example, the electronic device 101 and the display 210 of FIG. 2 may include the electronic device 101 and the display 210 of FIG. 4A to FIG. 4C.

Referring to FIG. 4A to FIG. 4C, exemplary operations performed by the electronic device 101 based on the motion of the external object 270 are illustrated in a chronological order within a time section in which the external object 270 contacted on the display 210. For example, states 410, 420, and 430 of FIG. 4A to FIG. 4C may be states of the electronic device 101 at different points in a single contact between the external object 270 and the display 210.

The state 410 of FIG. 4A may be an example of a state in which the electronic device 101 displays a stroke 412 based on the external object 270 dragged from a point A to a point B of an area 250 of the display 210, according to an embodiment. In an embodiment, the electronic device 101 may repeatedly identify a position of the external object 270 contacted on the display 210 per preset period. The preset period may include, as a non-limiting example, 120 Hz, and/or 8.33 milliseconds. Prior to the state 410, within an initial state in which the external object 270 is contacted on the point A, the electronic device 101 may generate a preset event (e.g., a touch down event) indicating start of a contact between the external object 270 and the display 210. The generated preset event may trigger displaying at least a portion of the stroke 412 based on a trajectory of the external object 270 within the area 250, based on execution of the note application 310 and/or the stroke recognizer 320 of FIG. 3 by the electronic device 101.

Based on identifying that the contact between the external object 270 and the display 210 is maintained after the initial state of identifying the external object 270 contacted on the point A, the electronic device 101 may generate the preset event (e.g., a touch move event) associated with maintaining the contact. The preset event may be generated based on identifying whether the external object 270 is contacted on the display 210. For example, the electronic device 101 may repeatedly identify whether the external object 270 is contacted on the display 210 based on the preset period. The preset event may be processed by the stroke recognizer 320 of FIG. 3, which is executed by the electronic device 101. For example, the electronic device 101 may obtain information (e.g., a dot list) to display the stroke 412 in the display 210 based on an occurrence of the preset event. For example, in the information, the electronic device 101 may accumulate a coordinate of the external object 270 contacted on the display 210 based on the preset period.

Referring to the state 410 of FIG. 4A, after the initial state, as the external object 270 contacted on the display 210 is dragged, the electronic device 101 may gradually extend the stroke 412 started from the point A. For example, within a time section from the initial state to the state 410, the stroke 412 displayed in the display 210 may track the external object 270. The electronic device 101 may track the position of the external object 270 contacted on the display 210 until a moment at which the external object 270 is identified to be separated from the display 210. At the moment, the electronic device 101 may generate the preset event (e.g., a touch up event) to notify that the external object 270 is separated from the display 210. The preset event may be processed based on execution of the stroke recognizer 320 of FIG. 3. In the state 410 of FIG. 4A in which the stroke 412 is displayed based on the motion of the external object 270, the electronic device 101 may identify that the motion to input the stroke 412 is completed based on the execution of the stroke recognizer 320 of FIG. 3. Within the case, the electronic device 101 may add data indicating that the external object 270 is separated from the point B in information to display the stroke 412. The single contact between the external object 270 and the display 210 may cause a sequential occurrence of one touch down event, one or more touch move events, and one touch up event.

As in the state 410 of FIG. 4A, while the contact between the external object 270 and the display 210 is maintained, the electronic device 101 may identify distribution (or deviation) of the position of the external object 270 contacted on the display 210 during a preset time section. The preset time section may include a time section (e.g., a sliding window formed based on a current moment) between the current moment and a past moment before preset duration, such as approximately 500 milliseconds. In an embodiment, a length of the preset duration may be greater than or equal to the preset period in which the electronic device 101 repeatedly identifies the position of the external object 270. The distribution of the position of the external object 270 may include coordinates of the external object 270 repeatedly identified by the electronic device 101 based on the preset period. The coordinates may be identified by the electronic device 101 based on repeated occurrence of the preset event such as the touch move event.

In the exemplary state 410 of FIG. 4A, the electronic device 101 according to an embodiment may identify whether the electronic device 101 is contacted within an area 414 within the preset time section, by comparing the area 414 formed based on the position (the point B in the state 410) of the external object 270 contacted on the display 210, and the distribution of the position of the external object 270 contacted on the display 210 within the preset time section. The area 414 may have centered around the point B and a preset size (e.g., 16 density-independent pixel (dp)) X 16 dp, 80 pixel X 80 pixels, and/or 8 pixel X 8 pixel). A size of the area 414 may be determined in advance to identify a hold of the external object 270 contacted on the display 210. For example, the size of the area 414 may be associated with a fine motion of a user holding the external object 270. In an embodiment, the area 414 may be formed based on the position of the external object 270 contacted on the display 210 to identify a pause of a drag by the external object 270.

In the state 410 of FIG. 4A, according to an embodiment, the electronic device 101 may obtain distribution of coordinates of the external object 270 repeatedly identified during the preset time section associated with the area 414 and the state 410. Referring to FIG. 4A, a histogram 414-1 indicating an x-axis distribution of the coordinates and a histogram 414-2 indicating a y-axis distribution of the coordinates are illustrated. According to an embodiment, the electronic device 101 may identify whether the distribution of the coordinates, visualized like the histograms 414-1 and 414-2, has a gaussian distribution. The gaussian distribution may mean that coordinates are concentrated within an area less than a preset standard deviation, based on a specific value, and/or coordinates, such as the exemplary histograms 414-1 and 414-2. For example, in case that the external object 270 is dragged based on the user's intention to draw the stroke 412 during the preset time section, the distribution of the coordinates of the external object 270 identified by the electronic device 101 during the time section may have a different distribution from the gaussian distribution. For example, in case that the external object 270 ceased based on the user's intention to stay at a specific point, such as the point B, during the preset time section, the distribution of the coordinates of the external object 270 identified by the electronic device 101 during the time section may have a gaussian distribution centered around the specific point, such as the exemplary histograms 414-1 and 414-2 of FIG. 4A. The specific point may be a midpoint of the area 414, or may be another point different from the midpoint within the area 414.

According to an embodiment, the electronic device 101 may identify whether the distribution of the coordinates has the gaussian distribution, based on an intermediate value and/or standard deviation of the coordinates of the external object 270 tracked during the preset time section within the area 414. Based on identifying that the coordinates of the external object 270 contacted on the display 210 have the gaussian distribution within the area 414, in the state 410 of FIG. 4A, the electronic device 101 may detect hold motion of the external object 270. Based on detecting the hold motion, the electronic device 101 may generate a preset event (e.g., a hold motion event). The preset event may be processed by the figure recognizer 330 of FIG. 3 and/or the figure converter 340 executed by the electronic device 101. For example, the electronic device 101 may identify a figure represented by the stroke 412 based on an occurrence of the preset event. The preset event may be generated by an input indicating a representation of a line based on conversion of the stroke 412.

As described above, according to an embodiment, the electronic device 101 may display a line in association with the stroke, in response to identifying that the external object 270 is contacted within the area 414 of the preset size in the display 210 during the preset time section, while identifying that the external object 270 is dragged. For example, the electronic device 101 may display the line in response to identifying that the external object 270 is contacted within the area 414 to identify the pause of the drag by the external object 270 during the preset time section. The electronic device 101 may compare the distribution of the coordinates of the external object 270 contacted on the display 210 with the gaussian distribution to more accurately identify whether motion of the external object 270 contacted on the display 210 is maintained.

Referring to FIG. 4B, the exemplary state 420 in which the electronic device 101 displays a line 422 based on identifying the distribution of coordinates of the external object 270 having the gaussian distribution in the state 410 is illustrated. The state 420 may include a state of the electronic device 101 entered by motion of the external object 270 maintained on the point B while a contact of the external object 270 first contacted on point A is maintained. For example, the electronic device 101 may enter into the state 420 in the state 410 of FIG. 4A based on an occurrence of the preset event (e.g., the hold motion event) associated with the point B.

According to an embodiment, the electronic device 101 may display the line 422 representing a figure associated with the stroke 412, based on identifying the external object 270 contacted within the area 414 during the preset time section in a state (e.g., the state 410 of FIG. 4A) of displaying the stroke 412 based on the trajectory of the external object 270. Based on identifying that a straight line is represented by the stroke 412 in the state 420 of FIG. 4B, the electronic device 101 may display the line 422 having a shape of the straight line. In the state 420 to display the line 422, the electronic device 101 may at least temporarily cease displaying the stroke 412 within the area 250 of the display 210.

In the state 420 of FIG. 4B, the electronic device 101 may execute different functions based on the motion of the external object 270. For example, based on identifying that the external object 270 is separated from the point B, the electronic device 101 may display the line 422 within the area 250 of the display 210. Based on the external object 270 separated from the point B, the electronic device 101 may identify an input indicating conversion of the stroke 412 of FIG. 4A into the line 422. Meanwhile, based on identifying that the external object 270 is dragged to another point different from the point B, the electronic device 101 may cease displaying the line 422. Based on the external object 270 dragged to the other point, the electronic device 101 may resume displaying of the stroke 412 of FIG. 4A. Based on the external object 270 dragged to the other point, the electronic device 101 may extend the displayed stroke 412 again. Referring to FIG. 4B, in case that the external object 270 is dragged from the point B toward the point C, the electronic device 101 may extend the stroke 412 toward the point C. For example, based on the external object 270 dragged to the other point different from the point B, the electronic device 101 may identify an input indicating extension of the stroke 412 of FIG. 4A.

Based on identifying that the external object 270 is maintained on the point B in the state 420 of FIG. 4B, the electronic device 101 may execute a function to rotate the line 422. For example, based on identifying the external object 270 contacted by exceeding the preset duration (e.g., 2000 milliseconds) on the point B in the state 420, the electronic device 101 may rotate the line 422 based on the trajectory of the external object 270. An operation of identifying the external object 270 maintained on the point B by the electronic device 101 may be performed at least based on the gaussian distribution described above with reference to FIG. 4A. For example, based on identifying the external object 270 contacted by exceeding the preset duration on the point B, the electronic device 101 may enter a preset mode to rotate the line 422. Based on entering the preset mode, the electronic device 101 may output feedback such as vibration.

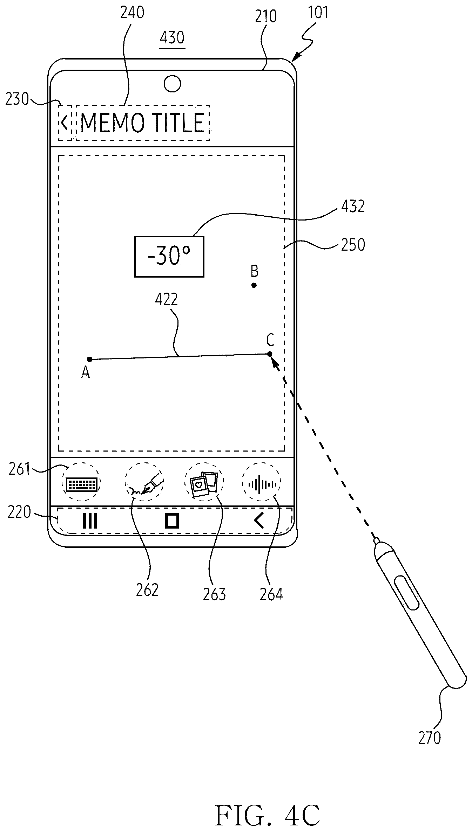

Referring to FIG. 4C, the state 430 after the external object 270 is dragged from the point B to the point C is illustrated after the external object 270 contacts the point B by exceeding the preset duration. According to an embodiment, the electronic device 101 may rotate the line 422 based on the trajectory of the external object 270 after entering the preset mode to rotate the line 422, based on the external object 270 contacted by exceeding the preset duration on the point B. Referring to the state 430 of FIG. 4C, the electronic device 101 may rotate the line 422 using the point A, which is an initial point of the line 422, as a pivot. While rotating the line 422, the electronic device 101 may display a visual object (e.g., a visual object rotated along the trajectory of the external object 270 based on a broken line) to guide the rotation of the line 422. In response to identifying that the drag of the external object 270 is completed, the electronic device 101 may change representation of the line 422 based on the displayed visual object.

In the exemplary state 430 of FIG. 4C, the point C in the display 210 to which the external object 270 is contacted may correspond to an end point of the line 422. According to an embodiment, as the electronic device 101 enters into the state 430 from the state 420, the line 422 may display an angle rotated by the trajectory of the external object 270 in the display 210. The angle may be displayed based on a visual object 432 such as a pop-up window displayed overlappingly on the area 250 of the display 210. Referring to FIG. 4C, within the visual object 432, the electronic device 101 may display a numerical value indicating the angle at which the line 422 is rotated.

In the state 430 of FIG. 4C, according to an embodiment, the electronic device 101 may execute different functions based on motion of the external object 270. For example, based on identifying the external object 270 separated from the point C, the electronic device 101 may maintain displaying the rotated line 422 based on the state 430. Based on the external object 270 separated from the point C in the state 430, the electronic device 101 may receive an input indicating that a change of the line 422 is completed. Meanwhile, based on identifying the external object 270 maintained by exceeding the preset duration (e.g., the 500 milliseconds) on a specific point (e.g., the point C), the electronic device 101 may cease displaying of the line 422, and enter into a state (e.g., the state 410 of FIG. 4A) in which a stroke (e.g., the stroke 412 of FIG. 4A) is displayed based on the trajectory of the external object 270.

Referring to FIG. 4A to FIG. 4C, according to an embodiment, the electronic device 101 may display the stroke 412 and/or the line 422 based on motion of the external object 270 contacted on the point A. The electronic device 101 may display the stroke 412 having a shape of a trajectory, based on the trajectory of the external object 270 dragged from the point A. The electronic device 101 may replace the stroke 412 with the line 422 based on the external object 270 contacted by exceeding a first time section on a specific point (e.g., the point B). In case that the external object 270 additionally remains on the specific point during a second time section after the first time section, the electronic device 101 may rotate the line 422 based on the trajectory of the external object 270 after the second time section. Referring to FIG. 4C, the electronic device 101 may rotate the line 422 based on a distance between the point B to the point C. In case that the external object 270 additionally remains on a specific point during a third time section after the second time section, the electronic device 101 may restore the stroke 412 displayed before the line 422. After restoring the stroke 412 based on the third time section, the electronic device 101 may extend the restored stroke 412 based on the trajectory of the external object 270.

As described above, according to an embodiment, the electronic device 101 may selectively display the stroke 412 and/or the line 422 based on the single contact between the display 210 and the external object 270. The electronic device 101 may receive an input to rotate the line 422 based on the single contact. Hereinafter, an example of operations in which the electronic device 101 rotates the line 422 based on the motion of the external object 270 contacted on the display 210 to draw the stroke 412 will be described with reference to FIG. 5.

FIG. 5 illustrates an example of an operation in which an electronic device 101 rotates a line 284 displayed in a display 210 based on motion of an external object 270 contacted on the display 210, according to an embodiment. The electronic device 101 of FIG. 5 may be an example of the electronic device 101 of FIG. 2. For example, the electronic device 101 and the display 210 of FIG. 2 may include the electronic device 101 and the display 210 of FIG. 5.

Referring to FIG. 5, a state 510 in which the electronic device 101 displays the line 284 within an area 250 of the display 210, based on the external object 270 ceased by exceeding preset duration on a point B, after being dragged from a point A to the point B is illustrated. A shape of the line 284 may correspond to a shape of a trajectory of the external object 270 dragged from the point A to the point B. The electronic device 101 may display an ellipse represented by the trajectory of the external object 270 dragged from the point A to the point B, based on the line 284. Displaying the line 284 from the trajectory of the external object 270 by the electronic device 101 may be performed based on an operation described above with reference to FIG. 4A. For example, the electronic device 101 may display the line 284, such as a portion 512 of FIG. 5, based on identifying motion of the external object 270 maintained on the point B, which is an end point of the trajectory of the external object 270.

According to an embodiment, the electronic device 101 may rotate the line 270 based on the trajectory of the external object 270 based on identifying the external object 270 ceased by exceeding the preset duration on the point B in the state 510. In a state of rotating the line 284 based on the external object 270, the electronic device 101 may display a visual object to indicate a pivot of the line 284 within the line 284 or a portion formed by the line 284. For example, the pivot may correspond to any one of an initial point (e.g., the point A), the end point (e.g., the point B), or a center point (e.g., a point C, a center of the ellipse distinguished by the line 284) of a figure distinguished by the line 284.

Referring to FIG. 5, states 520, 530, and 540 of the portion 512 after the electronic device 101 rotates the line 284 based on the external object 270 dragged from the point B to a point P in the state 510, are illustrated. The portion 512 may include a portion of the display 210 on which the line 284 is displayed. Each of the states 520, 530, and 540 of the portion 512 may include different states in which the electronic device 101 rotates the line 284 by different pivots. In the state 520, the electronic device 101 may rotate the line 284 based on the external object 270 dragged from the point B to the point P with the point C, which is the center of the ellipse distinguished by the line 284 as the pivot. A line 284-1 in the state 520 may indicate the line 284 rotated by the external object 270 dragged to the point P. In the state 530, the electronic device 101 may rotate the line 284 with the point A, which is an initial point of the trajectory of the dragged external object 270 to display the line 284 as the pivot. A line 284-2 in the state 530 may indicate the line 284 rotated by the external object 270 dragged from the point B to the point P. In the state 540, the electronic device 101 may rotate the line 284 based on the external object 270 on the point P with the point B, which is the end point of a stroke corresponding to the line 284, as the pivot. A line 284-3 in the state 540 may indicate a result of the electronic device 101 rotating the line 284 based on the external object 270.

As described above, according to an embodiment, the electronic device 101 may perform representation of the line 284 and even rotation of the line 284 based on the motion of the external object 270 contacted on the display 210. The electronic device 101 may perform the representation and the rotation of the line 284 through a single contact between the display 210 and the external object 270. According to an embodiment, the electronic device 101 may set at least one of the center point of the figure corresponding to the line 284, the initial point of the stroke corresponding to the line 284, or the end point as the pivot in the state 510 of rotating the line 284 based on the trajectory and/or position of the external object 270. According to an embodiment, the electronic device 101 may reinforce a user experience associated with the single contact by supporting an input of the stroke, the displaying of the line 284 corresponding to the stroke, and/or the rotation based on the single contact. Although an exemplary operation in which the electronic device 101 displays the line 284 from the stroke based on the single contact is described, the embodiment is not limited thereto. The electronic device 101 may receive an input indicating rotation of a figure based on a hold motion event for the figure displayed within the area 250.

According to an embodiment, a function executed by the electronic device 101 based on the trajectory of the external object 270 is not limited to a function of rotating the line 284 having a shape associated with the trajectory. Hereinafter, an example of an operation in which the electronic device 101 changes the representation of the line 284 based on the trajectory of the external object 270 will be described with reference to FIG. 6A to FIG. 6D.

FIG. 6A to FIG. 6D illustrate an example of an operation in which the electronic device 101 adjusts a shape and/or a color of lines 612, 622, and 632 displayed in a display 210 based on motion of an external object 270 contacted on the display 210, according to an embodiment. The electronic device 101 of FIG. 6A to FIG. 6D may be an example of the electronic device 101 of FIG. 2. For example, the electronic device 101 and the display 210 of FIG. 2 may include the electronic device 101 and the display 210 of FIG. 6A to FIG. 6D.

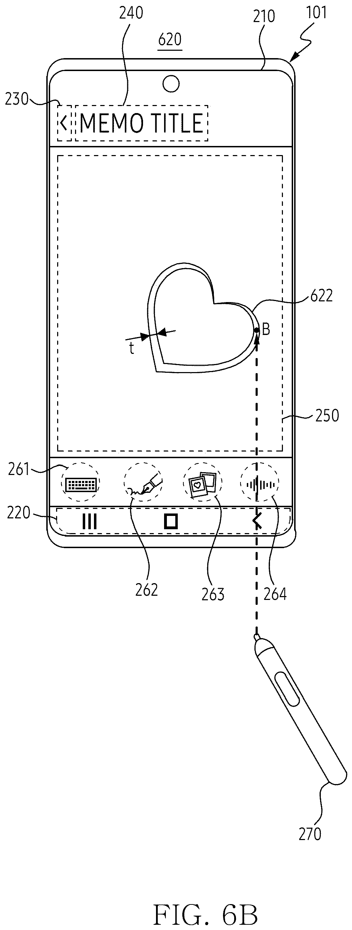

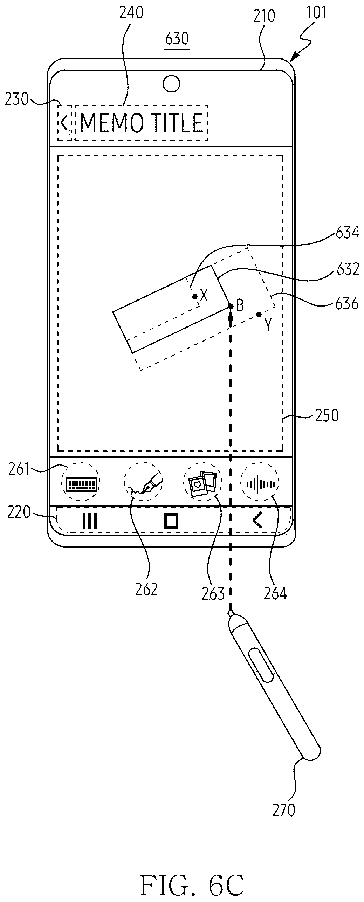

Referring to FIG. 6A to FIG. 6D, different states 610, 620, and 630 in which the electronic device 101 displays the different lines 612, 622, and 632 based on a trajectory of the external object 270 are exemplarily illustrated. The lines 612, 622, and 632 of FIG. 6A to FIG. 6D may have shapes of figures represented by strokes displayed within an area 250 by different trajectories of the external object 270 having a point B as an end point. For example, the line 612 in the state 610 of FIG. 6A may be displayed by the electronic device 101, based on identifying that a figure represented by a first trajectory of the external object 270 having the point B as the end point corresponds to a star. For example, the line 622 in the state 620 of FIG. 6B may be displayed by the electronic device 101, based on identifying that a figure represented by a second trajectory of the external object 270 having the point B as the end point corresponds to a heart. For example, the line 632 in the state 630 of FIG. 6C may be displayed by the electronic device 101 based on identifying that a figure represented by a third trajectory of the external object 270 with the point B as the end point corresponds to a square.

According to an embodiment, the electronic device 101 may enter into a mode to change representation of a line (e.g., the lines 612, 622, and 632 of FIG. 6A to FIG. 6C), based on the external object 270 maintained on a specific point (e.g., the point B) on the display 210, such as a hold motion event. The mode may include a mode of rotating the line described above with reference to FIG. 4A to FIG. 4C and/or FIG. 5. The mode may include a mode to adjust a color of a line, which will be described later with reference to the state 610 of FIG. 6A. The mode may include a mode to adjust thickness of a line, which will be described later with reference to the state 620 of FIG. 6B. The mode may include a mode to adjust size of a figure represented by a line, which will be described later with reference to the state 630 of FIG. 6C. The electronic device 101 may select a mode among the above-described modes based on an option selected by a user based on an occurrence of the hold motion event.

In the state 610 of FIG. 6A, based on identifying the external object 270 fixed on the point B, the electronic device 101 may display the line 612 from a stroke drawn by the external object 270. According to an embodiment, as the external object 270 is continuously fixed on the point B, the electronic device 101 may display a visual object 614 to adjust the color of the line 612. According to an embodiment, the visual object 614 may have a shape of a pop-up window, which is displayed overlappingly on the area 250 of the display 210. According to an embodiment, the electronic device 101 may display a list of a preset number of colors in the visual object 614. Referring to FIG. 6A, an example in which the electronic device 101 displays visual objects having a rectangular shape filled with each of the preset number of colors along a preset direction (e.g., a horizontal direction of a screen displayed in the display 210) in the visual object 614 is illustrated. However, the embodiment is not limited thereto.

In the state 610 of FIG. 6A, according to an embodiment, the electronic device 101 may change the color of the line 612, based on the trajectory of the external object 270 dragged to another point different from the point B. For example, the electronic device 101 may change the color of the line 612, based on the trajectory of the external object 270 dragged along a direction (e.g., the horizontal direction of the screen displayed within the display 210) of visual objects filled with different colors in the visual object 614. The electronic device 101 may emphasize a specific color selected by the trajectory of the external object 270 within a list of the colors in the visual object 614.

In the state 620 of FIG. 6B, based on identifying the external object 270 fixed on the point B, the electronic device 101 may display the line 622 from a stroke inputted by motion of the external object 270. In the state 620 of FIG. 6B, based on receiving a heart-shaped stroke by the external object 270, the electronic device 101 may display the line 622 based on the heart-shaped figure. As the external object 270 is fixed on the point B, the electronic device 101 may enter into a mode to adjust thickness t of the line 622. In the mode, the electronic device 101 may change the thickness t of the line 622 based on the dragged external object 270 to another point different from the point B. For example, in proportion to a distance between the point B and the other point contacted by the external object 270, the electronic device 101 may increase the thickness t of the line 622.

In the state 630 of FIG. 6C, the electronic device 101 according to an embodiment may display the line 632 based on a rectangular figure from a stroke, based on the external object 270 fixed on the point B after receiving the stroke having the rectangular shape by motion of the external object 270. After displaying the line 632, based on identifying that the external object 270 is fixed on the point B during preset duration, the electronic device 101 may enter into a mode to enlarge or reduce the figure represented by the line 632. In the mode, the electronic device 101 may change a size of the figure represented by the line 632 based on the external object 270 dragged to another point (e.g., a point X, and/or a point Y) different from the point B. For example, in case that identifying the external object 270 dragged from the point B to the point X, the electronic device 101 may display the line 634 representing a reduced figure based on the point X. For example, in case that identifying the external object 270 dragged from the point B to the point Y, the electronic device 101 may display a line 636 representing an enlarged figure based on the point Y.

In at least one of the states 610, 620, and 630 of FIG. 6A to FIG. 6C, the electronic device 101 may receive an input indicating restoration of the line indicating the figure represented by the stroke to the stroke. For example, in the state 630 of FIG. 6C, in response to identifying the external object 270 ceased by exceeding the preset duration on the point B of the line 632, the electronic device 101 may cease displaying of the line 632 and may display a stroke corresponding to the line 632.

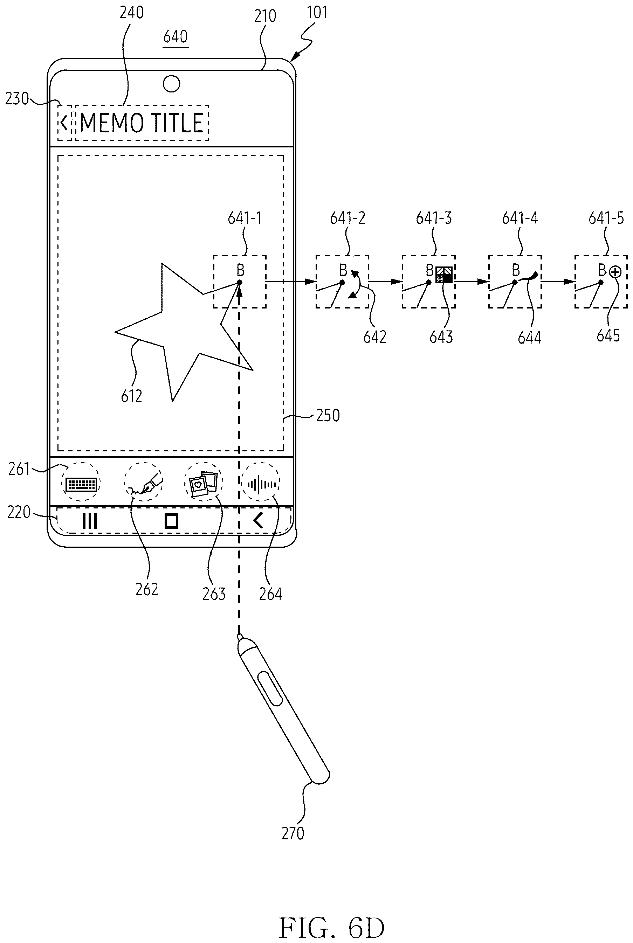

Referring to FIG. 6D, the electronic device 101 according to an embodiment may display a visual object for selecting modes to change rotation, a color, thickness, or a size of the line 612 while identifying the external object 270 fixed on the point B in the line 612. Referring to FIG. 6D, in a state 640, in a state of identifying the external object 270 fixed on the point B, the electronic device 101 may sequentially display visual objects 642, 643, 644, and 645 to indicate a mode selected based on movement of the external object 270 in a portion 641-1 of the display 210 including the point B.

For example, in the state 640, based on identifying the external object 270 fixed on the point B by exceeding a first preset duration (e.g., 2000 milliseconds), the electronic device 101 may display the visual object 642 indicating rotation of the line 612 overlappingly on a portion 641-2 adjacent to the point B. The visual object 642 may have a shape of a curved bidirectional arrow. While the visual object 642 is displayed, based on identifying the external object 270 moved to another point different from the point B, the electronic device 101 may rotate the line 612 based on a distance between the point B and the other point.

For example, in the state 640, based on identifying the external object 270 fixed on the point B by exceeding a second preset duration (e.g., 4000 milliseconds), the electronic device 101 may display the visual object 643 to guide execution of a mode for adjusting the color of the line 612. While the visual object 643 is displayed, based on identifying the external object 270 moved to another point different from the point B, the electronic device 101 may switch from the state 640 of FIG. 6D to the state 610 of FIG. 6A.

For example, in the state 640, based on identifying the external object 270 fixed on the point B by exceeding a third preset duration (e.g., 6000 milliseconds), the electronic device 101 may display the visual object 644 to guide execution of a mode that changes the thickness of the line 612. While the visual object 644 is displayed, based on identifying the external object 270 moved to another point different from the point B, the electronic device 101 may adjust the thickness of the line 612 based on the other point, such as in the state 620 of FIG. 6B.

For example, in the state 640, based on identifying the external object 270 fixed on the point B by exceeding a fourth preset duration (e.g., 8000 milliseconds), the electronic device 101 may display the visual object 645 to guide execution of a mode for adjusting the size of the line 612. While the visual object 645 is displayed, based on identifying the external object 270 moved to another point different from the point B, the electronic device 101 may enlarge or reduce the line 612 similar to the state 630 of FIG. 6C, based on a distance between the point B and the other point.

While circulating modes to change each the rotation, the color, the thickness, or the size of the line 612, the first preset duration to the fourth preset duration used by the electronic device 101 are not limited to the example. According to an embodiment, an order in which the electronic device 101 circulates the modes based on maintenance of the external object 270 contacted on the display 210 is not limited to the example.

As described above, based on identifying that the external object 270 is continuously in contact with the end point of the stroke in a state in which the line indicating the figure represented by the stroke (e.g., the lines 612, 622, and 632 of FIGS. 6A to 6D) is displayed, the electronic device 101 according to an embodiment may enter into a mode to change at least one of thickness, a color, or size of the line. In the mode, the electronic device 101 may change at least one of the thickness, the color, or the size of the line based on the trajectory of the dragged external object 270. In case of entering into the mode of changing the color of the line, the electronic device 101 may display the visual object (e.g., the visual object 614 of FIG. 6A) for selecting the color to be filled in the line.

FIG. 7 illustrates an example of operations performed by an electronic device based on identifying an external object contacted on a display, according to an embodiment. The electronic device of FIG. 7 may be an example of the electronic device 101 of FIG. 2. For example, at least one of the operations of FIG. 7 may be performed by the electronic device 101 and/or the processor 120 of FIG. 2.

Referring to FIG. 7, in operation 710, the electronic device according to an embodiment may display a stroke based on a trajectory of the external object dragged on the display. A state 410 of FIG. 4A may be a state in which the electronic device displays the stroke (e.g., the stroke 412 of FIG. 4A) based on the operation 710.

Referring to FIG. 7, in operation 720, the electronic device according to an embodiment may determine whether the external object is contacted by exceeding a first preset duration within an area of a preset size. The first preset duration and the area of the preset size (e.g., the area 414 of FIG. 4A) may be predetermined to identify a preset gesture for changing a displayed stroke into a line based on the operation 710. The preset gesture may include a gesture for maintaining the external object as a specific point on the display in a state of not separating the external object contacted on the display. According to an embodiment, the electronic device, as described above with reference to FIG. 4A, may determine whether the preset gesture is performed based on whether coordinates of the external object within the area of the preset size have a gaussian distribution within the area.

In case that the external object is not contacted within an area of the operation 720 during the first preset duration (720-NO), in operation 740 of FIG. 7, according to an embodiment, the electronic device may identify whether the external object is separated from the display. Referring to FIG. 7, before the external object is separated from the display (740-NO), the electronic device may continuously extend the stroke displayed in the display based on the trajectory of the external object based on the operations 710, 720, 740. For example, based on the operations 710, 720, and 740 of FIG. 7, the electronic device may repeatedly measure the coordinates of the external object contacted on the display. The electronic device may accumulate the repeatedly measured coordinates in information to indicate the stroke.

Based on identifying that the external object is separated from the display (740-YES), in operation 745 of FIG. 7, according to an embodiment, the electronic device may obtain information for displaying the stroke in the display. The information may include an initial point and an end point of the stroke, and coordinates of one or more intermediate points between the initial point and the end point, and thickness of the stroke at the intermediate points.

Based on identifying that the external object is contacted within the area of the operation 720 during the first preset duration (720-YES), in operation 730 of FIG. 7, according to an embodiment, the electronic device may display the line associated with the stroke. For example, the electronic device may display the line having a shape of an outline of a figure represented by the stroke on the display, such as the state 420 of FIG. 4B. The electronic device may display the stroke and/or the line according to a preset transparency (or alpha value).

Referring to FIG. 7, in operation 750 after the operation 730, the electronic device according to an embodiment may determine whether the external object moved outside the area of the preset size of the operation 720. For example, after displaying the line based on the operation 730, the electronic device may identify whether a contact of the display and the external object is maintained within the area of the preset size.

In case that the external object has not moved outside of the area (750-NO), in operation 770 of FIG. 7, the electronic device according to an embodiment may determine whether the external object is contacted by exceeding a second preset duration within the area of the preset size. Before exceeding the second preset duration (770-NO), the electronic device may monitor a position of the external object based on the operations 750 and 770.

In case that the external object is contacted within the area of the preset size by exceeding the second preset duration (770-YES), in operation 780, according to an embodiment, the electronic device may display the stroke among the stroke and the line. For example, the electronic device may cease displaying the line based on the operation 730 and may resume displaying the stroke displayed in the display based on the operations 710, 720, 740. After displaying the stroke based on the operation 780, the electronic device may perform the operation of displaying the stroke again based on the trajectory of the external object based on the operation 710 of FIG. 7.

After displaying the line based on the operation 730, in case that the external object moves out of the area of the preset size (750-YES), according to an embodiment, the electronic device may rotate the line based on the trajectory of the external object in the operation 760. As described above with reference to the states 420 and 430 of FIG. 4B to FIG. 4C and/or FIG. 5, the electronic device may select at least one of a center point, an initial point of the stroke, or an end point of the figure formed by a line, as a pivot. The electronic device may rotate the line along the trajectory of the external object based on the selected pivot. The electronic device may display, on the display, a visual object including an angle at which the line is rotated. Based on operation 765 of FIG. 7, rotation of the line by the electronic device based on the trajectory of the external object may be performed based on whether the external object is separated from the display. Before the external object is separated from the display, the electronic device may maintain to rotate the line based on the trajectory of the external object. For example, in case that the external object is separated from the display, the electronic device may obtain information to display the line rotated by the operation 760.

FIG. 8 illustrates an example of operations performed by an electronic device according to an embodiment. The electronic device of FIG. 8 may be an example of the electronic device 101 of FIG. 2. For example, at least one of operations of FIG. 8 may be performed by the electronic device 101 and/or the processor 120 of FIG. 2. The at least one of the operations of FIG. 8 may be associated with at least one of the operations of FIG. 7.

Referring to FIG. 8, in operation 810, the electronic device according to an embodiment may display a stroke based on a trajectory of an external object dragged on a display. The electronic device may track a position of the external object contacted on the display based on the operations 710, 720, and 740 of FIG. 7 to identify the trajectory of the external object dragged on the display.

While a contact between the external object and the display is maintained, in operation 820, the electronic device according to an embodiment may replace the stroke with a line based on whether the external object dragged on the display is contacted by exceeding preset duration within an area having a preset size in the display. The area having the preset size may be an area formed to identify that the external object is fixed on the display, such as the area 414 of FIG. 4A. The preset duration may be duration predetermined to identify the external object ceased to replace the stroke with the line. The electronic device may select a figure represented by the stroke among preset figures. The electronic device may display the line corresponding to the stroke based on an outline of a figure selected among the preset figures.

After replacing the stroke with the line, in operation 830, the electronic device according to an embodiment may receive an input indicating modification of representation of the line based on the trajectory of the external object dragged on the display. The input may be received based on the trajectory of the external object contacted on the display. Before the external object contacted on the display is separated, the electronic device may receive the input of the operation 830 to display the stroke of the operation 810.

Referring to FIG. 8, in operation 840, the electronic device according to an embodiment may change the representation of the line based on the received input. For example, the electronic device may rotate the line based on the input of the operation 830, such as described above with reference to FIG. 4C and/or FIG. 5. For example, the electronic device may change a color, thickness, or a size of the figure formed by the line based on the input of the operation 830, as described above with reference to FIG. 6A to FIG. 6D. The electronic device changing the representation of the line based on the input may be performed until the external object contacted on the display to display the stroke in the operation 810 is separated.

As described above, the electronic device according to an embodiment may add the stroke in the display, display the line based on the stroke, and then change the representation of the line, based on the display and a single contact of the external object. Based on the single contact, the electronic device may enhance a user experience associated with inputting handwriting based on the external object. For example, based on the single contact, the electronic device may execute various functions associated with the input of the stroke, and/or the line.

A method to execute various functions associated with drawing based on the external object may be required based on single motion distinguished by a contact, and separation of the display and the external object.

As described above, an electronic device (e.g., the electronic device 101 of FIG. 2) according to an embodiment may comprise a display (e.g., the display 210 of FIG. 2), and a processor (e.g., the processor 120 of FIG. 3). The processor may be configured to display, in response to identifying an external object (e.g., the external object 270 of FIG. 2) dragged on the display, a stroke (e.g., the stroke 412 of FIG. 4A) based on a trajectory of the dragged external object. The processor may be configured to, while identifying that the external object is dragged, display, in response to identifying that the dragged external object is contacted within an area having a preset size in the display during a first time section, a line (e.g., the line 412 of FIG. 4A) in association with the stroke. The processor may be configured to, while identifying that the external object is dragged, rotate, in response to identifying that the dragged external object is contacted with the area during a second time section after the first time section, the line based on a trajectory of the external object being dragged to another area different from the area after the second time section. According to an embodiment, the electronic device may execute all functions of representation the stroke, obtaining the line based on the stroke, and changing the representation of the line based on a single contact between the display and the external object.

For example, the processor may be configured to rotate, based on whether a contact between the external object and the display is maintained during the second time section after a moment when the stroke was displayed based on the trajectory, the line based on the trajectory.

For example, the processor may be configured to obtain, by repeatedly identifying a position of the external object that is contacted on the display per preset period, information to display the stroke in the display.

For example, the processor may be configured to display, in response to identifying that the external object is contacted within the area having the preset size to identify a pause of a drag by the external object during the first time section, the line.

For example, the processor may be configured to rotate, based on a distance between a first position of the external object contacted within the area during the second time section, and a second position of the external object within the another area, the line.

For example, the processor may be configured to display, in a state in which the line is rotated based on the external object after the second time section, a visual object to indicate an angle by which the line is rotated, in the display.

For example, the processor may be configured to display, in a state in which the line is rotated based on the external object after the second time section, a visual object to indicate a pivot of the line at the line or in a portion formed by the line.

For example, the processor may be configured to display the visual object to indicate the pivot at one of a center point of the portion, a point corresponding to an initial point of the trajectory on the line, or a point where the external object is contacted within the area.

For example, the processor may be configured to cease to, in response to identifying that the dragged external object is contacted within the area during a third time section after the second time section, display the line, and display the stroke.

For example, the processor may be configured to, after the third time section, extend, based on the trajectory of the dragged external object, the stroke.

For example, the processor may be configured to, after the second time section, display, based on the trajectory of the external object being dragged to the another area, a visual object to guide rotation of the line overlappingly on the line. The processor may be configured to, in a state in which the visual object is displayed, change, in response to identifying that the drag of the external object is completed, representation of the line based on the visual object.

For example, the processor may be configured to display, based on identifying the external object that is contacted within the area during the first time section, the line representing a figure associated with the stroke.

As described above, a method of an electronic device according to an embodiment may include displaying (e.g., the operation 810 of FIG. 8), based on identifying of an external object being dragged on a display in the electronic device, a stroke based on a trajectory of the dragged external object. The method may include displaying (e.g., the operation 820 of FIG. 8), in a state that a contact between the external object, and the display associated with the stroke is maintained, a line for representing a figure based on the stroke, in response to identifying that the external object is contacted within an area having a preset size in the display during a first time section. The method may include receiving (e.g., the operation 830 of FIG. 8), based on the external object contacted on the line in the display in the state, an input indicating modification of representation of the line. The method may include changing (e.g., the operation 840 of FIG. 8) the representation of the line based on the received input.

For example, the displaying the stroke may include obtaining, by repeatedly identifying a position of the external object that is contacted on the display per preset period, information to display the stroke in the display.

For example, the displaying the line may include displaying, based on identifying that the external object is contacted within the area having the preset size to identify a pause of a drag by the external object during the first time section, the line.

For example, the displaying the line may include repeatedly obtaining, based on a preset period shorter than the first time section, positions of the external object being contacted in the area during the first time section. The displaying the line may include identifying, based on distribution of the obtained positions, whether to display the line.

For example, the changing the representation may include changing, at least based on whether a contact between the external object and the display is maintained until a second time section after the first time section after a moment when the stroke was displayed based on the trajectory, the representation based on the input.

For example, the changing the representation may include rotating, based on identifying that the external object is contacted within the area during the second time section after the first time section in the state, the line based on the trajectory of the external object being dragged to another area different from the area after the second time section.

For example, the changing the representation may comprise changing, based on identifying that the external object is contacted within the area during the second time section after the first time section in the state, at least one of thickness, a color, or a size of the line based on a trajectory of the external object dragged after the second time section.

For example, the changing the representation may include displaying, based on changing the color of the line based on the trajectory after the second time section, in the display, a visual object to select a color to be filled in the line among a plurality of colors based on the trajectory.

As described above, a method of an electronic device according to an embodiment may include displaying (e.g., the operation 710 of FIG. 7), in response to identifying of an external object being dragged on a display in the electronic device, a stroke based on a trajectory that the dragged external object. The method may include, while identifying that the external object is dragged, displaying (e.g., the operation 750 of FIG. 7), in response to identifying that the dragged external object is contacted within an area having a preset size in the display during a first time section, a line in association with the stroke. The method may include, while identifying that the external object is dragged, rotating (e.g., the operation 760 of FIG. 7), in response to identifying that the dragged external object is contacted with the area during a second time section after the first time section, the line based on the external object which is dragged to another area different from the area after the second time section.

For example, the rotating may include rotating, based on whether a contact between the external object and the display is maintained until the second time section after a moment when the stroke was displayed based on the trajectory, the line based on the trajectory.

For example, the displaying the stroke may include obtaining, by repeatedly identifying a position of the external object that is contacted on the display per preset period, information to display the stroke in the display.

For example, the displaying the line may include displaying, in response to identifying that the external object is contacted in the area with the preset size to identify a pause of a drag by the external object during the first time section, the line.

For example, the rotating may include rotating, based on a distance between a first position of the external object contacted within the area during the second time section, and a second position of the external object in the another area, the line.

For example, the rotating may include displaying, in a state in which the line is rotated based on the external object after the second time section, a visual object to indicate an angle by which the line is rotated, in the display.

For example, the rotating may include identifying a pivot associated with rotation of the line based on at least one of a center point of a portion formed by the line, a point corresponding to an initial point of the trajectory, or a point that the external object is contacted within the area.

For example, the method may include ceasing to, in response to identifying that the dragged external object is contacted within the area during a third time section after the second time section, display the line, and display the stroke.

For example, the rotating may include, after the second time section, displaying, based on the trajectory of the external object being dragged to the another area, a visual object to guide rotation of the line overlappingly on the line. The rotating may include, in a state in which the visual object is displayed, changing, in response to identifying that the drag of the external object is completed, representation of the line based on the visual object.

As described above, an electronic device (e.g., the electronic device 101 of FIG. 2) according to an embodiment may comprise a display (e.g., the display 210 of FIG. 2) and a processor (e.g., the processor 120 of FIG. 3). The processor may be configured to display, based on identifying an external object (e.g., the external object 270 of FIG. 2) dragged on the display, a stroke (e.g., the stroke 412 of FIG. 4A) based on a trajectory of the dragged external object. The processor may be configured to display, in a state that a contact between the external object, and the display associated with the stroke is maintained, a line (e.g., the line 422 of FIG. 4B) for representing a figure based on the stroke, in response to identifying that the external object is contacted within an area having a preset size in the display during a first time section. The processor may be configured to receive, based on the external object contacted on the line in the display in the state, an input indicating modification of representation of the line. The processor may be configured to change the representation of the line based on the received input.

For example, the processor may be configured to obtain, by repeatedly identifying a position of the external object that is contacted on the display per preset period, information to display the stroke in the display.

For example, the processor may be configured to display, based on identifying that the external object is contacted within the area having the preset size to identify a pause of a drag by the external object during the first time section, the line.

For example, the processor may be configured to repeatedly obtain, based on a preset period shorter than the first time section, positions of the external object being contacted in the area during the first time section. The processor may be configured to identify, based on distribution of the obtained positions, whether to display the line.

For example, the processor may be configured to rotate, based on identifying that the external object is contacted within the area during the second time section after the first time section in the state, the line based on the trajectory of the external object being dragged to another area different from the area after the second time section.

For example, the processor may be configured to changing, based on identifying that the external object is contacted within the area during the second time section after the first time section in the state, at least one of thickness, a color, or a size of the line based on a trajectory of the external object dragged after the second time section.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. An electronic device (101), comprising:
a display (210); and
a processor (120), wherein the processor is configured to:
display, in response to identifying an external object (270) dragged on the display, a stroke (412) based on a trajectory of the dragged external object;
while identifying that the external object is dragged, display, in response to identifying that the dragged external object is contacted within an area (414) having a preset size in the display during a first time section, a line (422) in association with the stroke; and
while identifying that the external object is dragged, rotate, in response to identifying that the dragged external object is contacted with the area during a second time section after the first time section, the line based on a trajectory of the external object being dragged to another area different from the area after the second time section.

2. The electronic device of claim 1, wherein the processor is configured to:
rotate, based on whether a contact between the external object and the display is maintained during the second time section after a moment when the stroke was displayed based on the trajectory, the line based on the trajectory.

3. The electronic device of any one of preceding claims, wherein the processor is configured to:
obtain, by repeatedly identifying a position of the external object that is contacted on the display per preset period, information to display the stroke in the display.

4. The electronic device of any one of preceding claims, wherein the processor is configured to:
display, in response to identifying that the external object is contacted within the area having the preset size to identify a pause of a drag by the external object during the first time section, the line.

5. The electronic device of any one of preceding claims, wherein the processor is configured to:
rotate, based on a distance between a first position of the external object contacted within the area during the second time section, and a second position of the external object within the another area, the line.

6. The electronic device of any one of preceding claims, wherein the processor is configured to:
display, in a state in which the line is rotated based on the external object after the second time section, a visual object to indicate an angle by which the line is rotated, in the display.

7. The electronic device of any one of preceding claims, wherein the processor is configured to:
display, in a state in which the line is rotated based on the external object after the second time section, a visual object to indicate a pivot of the line at the line or in a portion formed by the line.

8. The electronic device of any one of preceding claims, wherein the processor is configured to:
display the visual object to indicate the pivot at one of a center point of the portion, a point corresponding to an initial point of the trajectory on the line, or a point where the external object is contacted within the area.

9. The electronic device of any one of preceding claims, wherein the processor is configured to:
cease to, in response to identifying that the dragged external object is contacted within the area during a third time section after the second time section, display the line, and display the stroke.

10. The electronic device of any one of preceding claims, wherein the processor is configured to:
after the third time section, extend, based on the trajectory of the dragged external object, the stroke.

11. The electronic device of any one of preceding claims, wherein the processor is configured to:
after the second time section, display, based on the trajectory of the external object being dragged to the another area, a visual object to guide rotation of the line overlappingly on the line; and
in a state in which the visual object is displayed, change, in response to identifying that the drag of the external object is completed, representation of the line based on the visual object.

12. The electronic device of any one of preceding claims, wherein the processor is configured to:
display, based on identifying the external object that is contacted within the area during the first time section, the line representing a figure associated with the stroke.

13. A method of an electronic device, comprising:
displaying (810), based on identifying of an external object being dragged on a display in the electronic device, a stroke based on a trajectory of the dragged external object;
displaying (820), in a state that a contact between the external object, and the display associated with the stroke is maintained, a line for representing a figure based on the stroke, in response to identifying that the external object is contacted within an area having a preset size in the display during a first time section;
receiving (820), based on the external object contacted on the line in the display in the state, an input indicating modification of representation of the line; and
changing (840) the representation of the line based on the received input.

14. The method of claim 13, wherein the displaying the stroke comprising,
obtaining, by repeatedly identifying a position of the external object that is contacted on the display per preset period, information to display the stroke in the display.

15. The method of any one of preceding claims, wherein the displaying the line comprising,
displaying, based on identifying that the external object is contacted within the area having the preset size to identify a pause of a drag by the external object during the first time section, the line.
